# EUROPÄISCHE PATENTSCHRIFT

(11) **EP 3 507 181 B1**
(45) Veröffentlichungstag und Bekanntmachung des Hinweises auf die Patenterteilung: **03.04.2024**
(21) Anmeldenummer: 17746554.9
(22) Anmeldetag: 20.07.2017
(51) Int. Cl.: B62J 43/13, B62J 43/28, B62M 6/90, B62K 3/04, B62K 19/02, B62K 19/40, B62M 6/40

(54) **FAHRRADRAHMEN UND ELEKTROFAHRRAD HIERMIT**
BICYCLE FRAME AND ELECTRIC BICYCLE COMPRISING SAME
CADRE DE VÉLO ET VÉLO ÉLECTRIQUE ÉQUIPÉ DE CELUI-CI

(30) Priorität: 30.08.2016 DE 202016104758 U
(43) Veröffentlichungstag der Anmeldung: 10.07.2019
(73) Patentinhaber: ZEG Zweirad-Einkaufs-Genossenschaft eG, 50739 Köln (DE)
(72) Erfinder: GEHRING, Hendrik, 51429 Bergisch Gladbach (DE)
(74) Vertreter: Patentanwälte Buschhoff Hennicke Althaus
(86) Internationale Anmeldenummer: PCT/IB2017/054391
(87) Internationale Veröffentlichungsnummer: WO 2018/042269

(56) Entgegenhaltungen:
- EP-A1- 2 653 371
- EP-A1- 2 653 371
- AT-A1- 514 406
- CN-A- 103 434 596
- CN-A- 105 329 389
- CN-U- 204 341 332
- DE-U1-202010 012 387
- DE-U1-202013 008 186
- JP-A- H1 159 532
- JP-A- H08 207 874
- JP-A- H08 207 874
- JP-A- H09 164 989
- US-A- 5 865 267
- US-A1- 2014 196 970

## Beschreibung

Die Erfindung betrifft einen Fahrradrahmen gemäß

Anspruch 1. Die Erfindung betrifft ferner auch ein Elektrofahrrad mit einem Fahrradrahmen nach Anspruch 1.

Elektrofahrräder, teilweise auch Pedelecs oder bei Zulassung für höhere Geschwindigkeiten auch S-Pedelecs genannt, verfügen über einen Elektromotor, der die vom Fahrer über die Tretkurbel erzeugte Antriebskraft unterstützt. Im Normalfall wirken die Elektromotoren nur als Kraftverstärker, und die Kraftunterstützung wird je nach Bauart des Elektrofahrrades auf bestimmte Maximalgeschwindigkeiten von z.B. 25km/h oder 45 km/h begrenzt. Die Elektromotoren können als Nabenmotor im Vorder- oder Hinterrad oder als Mittenmotor im Bereich des Tretlagers angeordnet werden und für die Elektromotoren ist zur Stromversorgung eine Energieversorgungseinheit vorzusehen, die während der Fahrt mitgeführt werden muss, im Regelfall zur Wiederaufladung demontierbar sein sollte, gut zugänglich sein sollte, das Fahrverhalten des Fahrrades möglichst nicht beeinflussen sollte und zugleich derart sicher am Fahrradrahmen befestigt werden muss, dass sie sich auch bei aufgrund unterschiedlichster Streckenverhältnisse und Fahrverhalten entstehenden Belastungen nicht löst. Eine Energieversorgungseinheit mit aufladbaren Akkueinheiten hat meist ein aus Kunststoff bestehendes Gehäuse mit einem von der Kapazität und der verbauten Technik abhängigen Gewicht und Volumen.

Eine derzeit im Markt gängige Lösung besteht darin, die Energieversorgungseinheit in den Fahrradgepäckträger oberhalb des Hinterrades zu integrieren und dort in ein Aufnahmefach einzuschieben. Andere Lösungen sehen vor, die Energieversorgungseinheit in eine Rahmenstrebe vollständig oder teilweise zu integrieren. Die EP 2134592 B1 beispielsweise offenbart eine in eine Ausschneidung im Unterrohr von oben einsetzbare Energieversorgungseinheit; die EP 2230164 B1 offenbart ein Unterrohr mit einem Innenraum, in welchen über eine Seitenöffnung eine Energieversorgungseinheit hineinschwenkbar und mittels eines Verschlussdeckels überdeckbar ist, weswegen das Vorhandensein einer Energieversorgungseinheit nur noch anhand des entsprechend größeren Profilquerschnitts des Unterrohrs erkennbar ist.

Um die Reichweite von Elektrofahrrädern zu erhöhen, existieren bereits Vorschläge, am Fahrradrahmen des Elektrofahrrades neben einer ersten Energieversorgungseinheit eine zweite Energieversorgungseinheit zu befestigen. Die DE 19935847C2 beispielsweise zeigt einen Fahrradrahmen, bei welchen sowohl an einem Oberrohr als auch an einem Unterrohr jeweils eine Energieversorgungseinheit befestigt ist. Beide Energieversorgungseinheiten liegen offen und sind über spezielle Befestigungseinrichtungen mit dem jeweiligen Rundrohr verbunden.

Aus der AT 514406 A1 ist ein Fahrradrahmen für Elektrofahrräder bekannt, bei welchen mindestens eine Rahmenstrebe einen I-Profil-Querschnitt mit Mittelsteg, Unterflansch und Oberflansch aufweist, an der zwei nebeneinanderliegende und durch den Mittelsteg voneinander getrennte Aufnahmeräume zur Aufnahme von Funktionselementen wie beispielsweise eines Akkumulators und einer Steuerelektronik ausgebildet sind. Um der Rahmenstrebe ausreichend Steifigkeit zu verleihen, besteht die Rahmenstrebe vorzugsweise aus einem Vollguss-Aluminiumprofil mit eingefrästen Aufnahmeräumen, und die seitlichen Öffnungen der Aufnahmeräume sind mittels fest an den Flanschenenden angeschweißter Abdeckungen verschlossen, die derart ausgelegt sind, dass sie mindestens 10 % der im Betrieb auftretenden Biege- und Torsionskräfte jeweils aufnehmen können.

Aus der US 2014/0196970 A1 ist es bekannt, einen Fahrradrahmen für Elektrofahrräder beispielsweise mit einer Rahmenstrebe mit einem T-Profil oder U-Profil zu versehen, um ein Batteriepack hängend mit relativ einfachen Arretiermitteln an dem Mittelsteg oder den beiden Seitenstegen hängend zu arretieren. An derselben Konstruktion können Batteriepacks unterschiedlicher Größen befestigt werden. Ein anderes Rahmenkonzept derselben Anmeldung sieht vor, dass eine geschlossene Rahmenstrebe den Aufnahmeraum für mehrere gleichartige Energieversorgungseinheiten bildet.

Aufgabe der Erfindung ist es, einen an unterschiedliche Aufgaben und Einsatzzwecke angepassten Fahrradrahmen für ein Elektrofahrrad sowie ein Elektrofahrrad hiermit zu schaffen.

Diese Aufgabe wird mit dem Fahrradrahmen gemäß Anspruch 1 gelöst. Vorteilhafte Ausgestaltungen sind in den Unteransprüchen angegeben.

Zur Lösung dieser Aufgabe ist unter anderem vorgesehen, dass der Fahrradrahmen wenigstens eine Rahmenstrebe mit zwei in Erstreckungsrichtung der Rahmenstrebe nebeneinander angeordneten Aufnahmeräumen versehen ist, wobei wahlweise beide Aufnahmeräume oder nur einer der Aufnahmeräume mit einer Energieversorgungseinheit bestückbar oder bestückt ist. Das Vorsehen von zwei Aufnahmeräumen für Energieversorgungseinheiten ermöglicht es, ein Elektrofahrrad schon in der Grundausstattung dem Verbraucher wahlweise mit einer an sein bevorzugtes Anwendungsspektrum insbesondere hinsichtlich notwendiger Reichweite angepasster elektrischer Versorgungsleistung anbieten zu können, wobei der Verbraucher ohne Einbußen an hochwertige Optik nach eigenen Bedürfnissen durch Zukauf oder zusätzliche Anbringung einer zweiten Energieversorgungseinheit die Reichweite erhöhen kann. Da beide Aufnahmeräume erfindungsgemäß an derselben Rahmenstrebe angeordnet sind, wird die Leitungsführung für elektrische Leitungen erheblich vereinfacht und zugleich sorgt dieses Konstruktionsprinzip für eine günstige Gewichtsverteilung. Ein besonderer Vorteil besteht darin, dass bei Verwendung nur einer Energieversorgungseinheit der "freie" Aufnahmeraum zur Anbringung beispielsweise eines Behälters als Stauraum für z.B. Werkzeug, Kleidung oder kleinerer Einkäufe genutzt werden kann.

Die Anordnung der Aufnahmeräume nebeneinander bildet das bevorzugte Ausführungsbeispiel. Gemäß einer Ausgestaltung kann die Rahmenstrebe, welche die zwei Aufnahmeräume aufweist, zumindest in dem mit den Aufnahmeräumen versehenen Abschnitt einen bezogen auf ihre Erstreckungsrichtung symmetrischen Profilquerschnitt aufweisen und/oder aus einem als Meterware erhältlichen Standardprofil bestehen. Gemäß der Erfindung ist eine Rahmenstrebe mit zwei durch einen Mittelsteg voneinander getrennten Aufnahmeräumen versehen , wobei jeder Aufnahmeraum eine Seitenöffnung hat, durch welche hindurch der jeweilige Aufnahmeraum mit einer Energieversorgungseinheit bestückbar oder bestückt ist. Besonders zweckmäßig weist die Rahmenstreben hierzu zumindest partiell einen H-förmigen Profilquerschnitt auf. Jeder Aufnahmeraum kann zur integrierten Aufnahme einer Energieversorgungseinheit ausgebildet sein, wobei jedem Aufnahmeraum dann ein an der Rahmenstrebe verankerbarer Verschlussdeckel zugeordnet sein kann. Alternativ könnte jeder Aufnahmeraum zur zumindest partiell integrierten Aufnahme einer Energieversorgungseinheit ausgebildet sein, wobei wenigstens einer der Aufnahmeräume mit einem an der Rahmenstrebe verankerbaren Verschlussdeckel verschließbar und als Stauraum verwendbar ist, nämlich wenn in diesem Aufnahmeraum keine Energieversorgungseinheit angeordnet ist. Alternativ wäre es möglich, dass jeder Aufnahmeraum zur integrierten Aufnahme einer Energieversorgungseinheit ausgebildet ist, wobei im Montagezustand einer Energieversorgungseinheit wenigstens eine Außenwand eines Gehäuses der Energieversorgungseinheit an der Rahmenstrebe freiliegt, und vorzugsweise den zugehörigen Aufnahmeraum verschließt.

Die Rahmenstrebe könnte gemäß einer nicht erfindungsgemäßen Ausgestaltung zumindest partiell einen Profilabschnitt mit T-förmigen Profilquerschnitt aufweisen.

Die mit zwei Aufnahmeräumen versehene Rahmenstrebe könnte gemäß einer vorteilhaften Ausgestaltung das Unterrohr des Fahrradrahmens bilden. Gemäß einer alternativen Ausgestaltung könnte der Fahrradrahmen mit einem Lenkkopfrohr und/oder Unterrohr mit dem Sattelrohr verbindenden Oberrohr versehen sein und die mit zwei Aufnahmeräumen versehene Rahmenstrebe bildet das Oberrohr des Fahrradrahmens. Ein Oberrohr könnte aber auch vorhanden sein, wenn das Unterrohr die mit den beiden Aufnahmeräumen versehene Profilstrebe bildet. Die mit den Aufnahmeräumen versehene Rahmenstrebe, bzw. der zugehörige Profilabschnitt, hat vorzugsweise keinen Rundprofilquerschnitt, und insbesondere einen Rechteckprofilquerschnitt.

Bei einem Elektrofahrrad ist der Fahrradrahmen zur Lösung der vorgenannten Aufgabe wie vorstehend beschrieben ausgebildet, wobei vorzugsweise wenigstens einer der Aufnahmeräume mit einer Energieversorgungeinheit bestückt ist und wahlweise nur einer oder beide Aufnahmeräume mit einer Energieversorgungseinheit bestückbar sind. Besonders zweckmäßig ist, wenn eine Schaltungsanordnung zur Detektierung, ob beide Aufnahmeräume jeweils mit einer Energieversorgungseinheit versehen sind, vorgesehen ist, wobei besonders vorteilhaft ist, wenn die Schaltungsanordnung auch zur Steuerung der Energieentnahme bei simultaner Bestückung des Elektrofahrrades mit mehreren Energieversorgungseinheiten ausgebildet ist. Für ein Elektrofahrrad kann ein in den Aufnahmeraum eingesetzter oder einsetzbarer Transportbehälter vorgesehen sein, wobei vorzugsweise jedem Aufnahmeraum Arretiereinrichtungen zum Zusammenwirken mit Arretiermitteln an einer Energieversorgungseinheit zugeordnet sind und der Transportbehälter mit den Arretiereinrichtungen am Fahrradrahmen zusammenwirkende Arretiermittel aufweist. Der Transportbehälter kann ein Behältergehäuse aufweisen, welches der Formgebung des Gehäuses der Energieversorgungseinheit im Wesentlichen entspricht.

Weitere Vorteile und Ausgestaltungen eines erfindungsgemäßen Fahrradrahmens sowie eines Elektrofahrrades hiermit ergeben sich aus der nachstehenden Beschreibung von schematisch teilweise stark vereinfacht in der Zeichnung gezeigten Ausführungsbeispielen. In der Zeichnung zeigen:
- **Fig. 1**: schematisch stark vereinfacht (Hohlkammer nicht dargestellt) einen erfindungsgemäßen Fahrradrahmen mit nebeneinander angeordneten Aufnahmeräumen für zwei separate Energieversorgungseinheiten gemäß einem ersten Ausführungsbeispiel in perspektivischer Ansicht;
- **Fig. 2**: einen Schnitt durch den Fahrradrahmen aus Fig. 1, mit zwei Energieversorgungseinheiten in Explosionsdarstellung;
- **Fig. 3**: schematisch stark vereinfacht einen Profilquerschnitt für eine Rahmenstrebe mit zwei Aufnahmeräumen und eingesetzten Energieversorgungseinheiten gemäß einer nicht erfindungsgemäßen Ausgestaltungsvariante;
- **Fig. 4**: schematisch stark vereinfacht einen Profilquerschnitt für eine Rahmenstrebe mit zwei Aufnahmeräumen gemäß einer nicht erfindungsgemäßen Ausgestaltungsvariante .
- **Fig. 5**: in perspektivischer Ansicht ein detaillierteres Ausführungsbeispiel eines erfindungsgemäßen Unterrohrs eines Elektrofahrrades zusammen mit einem Lenkkopfrohr sowie einem eingebauten Elektromotor bei demontierten Energieversorgungseinheiten;
- **Fig. 6**: das Unterrohr aus Fig. 5 in Seitenansicht;
- **Fig. 7**: einen Schnitt durch das Unterrohr entlang VII-VII in Figur 6; und
- **Fig. 8**: schematisch vereinfacht die Schnittansicht aus Figur 7 zusammen mit schematisch angedeuteten Energieversorgungseinheiten.

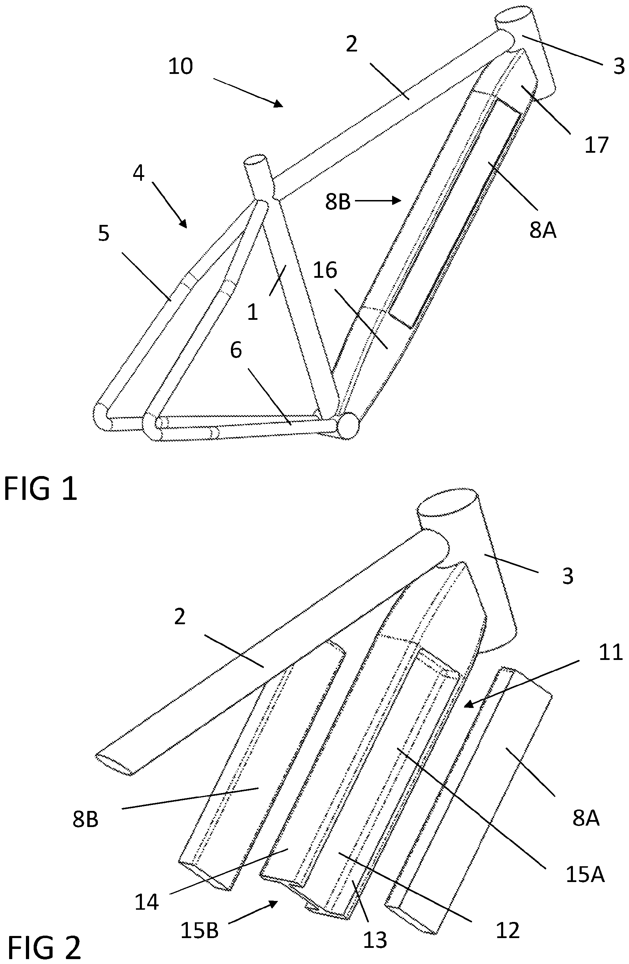

In Figur 1 ist beispielhaft und schematisch stark vereinfacht ein insgesamt mit Bezugszeichen 10 bezeichneter Fahrradrahmen für ein Elektrofahrrad dargestellt, wobei nur schematisch ein Sattelrohr 1, ein Oberrohr 2, ein Lenkkopfrohr 3, ein Hinterbau 4 mit Sattelstreben 5 und Kettenstreben 6 sowie ein Unterrohr 7 gezeigt sind. Sämtliche den Fahrradrahmen 10 zu einem Elektrofahrrad ergänzenden Elemente wie beispielsweise ein Elektromotor, Pedalen, Reifen, Lenker etc. sind nicht dargestellt. Während im gezeigten Ausführungsbeispiel das Sattelrohr 1, das Oberrohr 2 sowie auch das Lenkkopfrohr 3 in an sich bekannter Weise aus Rundrohren bestehen, handelt es sich beim Unterrohr 7 um ein Sonderbauteil mit hier weitestgehend rechteckförmigen Querschnitt, wobei das Unterrohr 7 zur integrierten Aufnahme von wahlweise einer oder zwei Energieversorgungseinheiten 8A, 8B ausgebildet ist.

Das Unterrohr 7 hat zur Aufnahme der Energieversorgungseinheiten 8A, 8B einen mittleren Profilabschnitt 11, der in der einfachsten Ausgestaltung aus einem Profilabschnitt mit konstantem Profilquerschnitt, hier einem H-förmigen bzw. Doppel-I-förmigen Profilquerschnitt, insbesondere aus Aluminium, besteht. Der entsprechende Profilquerschnitt bildet daher jeweils zwischen seinem Mittelsteg 12, einem Untergurt 13 sowie einem Obergurt 14 zwei voneinander getrennte, in Erstreckungsrichtung des Profilabschnitts 11 bzw. des Unterrohrs 7 betrachtet nebeneinanderliegende Aufnahmeräume 15A, 15B, wobei beide Aufnahmeräume 15A, 15B eine Seitenöffnung haben, über die in jeden dieser Aufnahmeräume 15A, 15B eine der beiden Energieversorgungseinheiten 8A, 8B eingesetzt bzw. einsetzbar ist. Die Energieversorgungseinheiten 8A, 8B sind über geeignete, am Gehäuse der Energieversorgungseinheit 8A bzw. 8B angebrachte, nicht dargestellte Arretiermittel, die mit ebenfalls nicht dargestellten Arretiereinrichtungen innerhalb der Aufnahmeräume 15A, 15B zusammenwirken, lösbar verankert bzw. verankerbar. Die Ausgestaltung ist vorzugsweise derart getroffen, dass die Energieversorgungseinheit 8A nicht nur im Aufnahmeraum 15A sondern auch im Aufnahmeraum 15B angeordnet werden könnte, genauso wie die Energieversorgungseinheit 8B. Ferner könnte anstelle einer der beiden Energieversorgungseinheiten 8A oder 8B in dem dann freibleibenden Aufnahmeraum auch ein Transportbehälter (nicht dargestellt) mit vorzugsweise weitestgehend gleichen Abmessungen seines Gehäuses wie die Gehäuse der Energieversorgungseinheiten 8A oder 8B angeordnet und befestigt werden, um Gegenstände wie insbesondere persönliche Gegenstände, oder Werkzeug, während der Fahrt mitzuführen.

Die Energieversorgungseinheiten 8A, 8B könnten unterschiedliche Kapazitäten aufweisen und zwischen dem Elektromotor und den elektrischen Anschlüssen (nicht dargestellt) innerhalb der Aufnahmeräume 15A, 15B kann eine Schaltungsanordnung (nicht dargestellt) zwischengeschaltet sein, um zu detektieren, ob und gegebenenfalls welcher der Aufnahmeräume mit einer Energieversorgungseinheit bestückt ist, und dann in Abhängigkeit von der Anzahl der vorhandenen Energieversorgungseinheiten die elektrische Versorgung des Elektromotors und damit die Energieentnahme an den Energieversorgungseinheiten zu steuern.

Da beim gezeigten Ausführungsbeispiel zur Erzeugung der beiden Aufnahmeräume 15A, 15B ein Standardprofil (Profilabschnitt 11) verwendet wird, sind zur Anbindung dieses Profilabschnitts 11 an die angrenzenden Rahmenstreben jeweils ein Übergangsstück 16 zum Sattelrohr 1 sowie ein Übergangsstück 17 zum Lenkkopfrohr 3 vorgesehen. Der Profilabschnitt mit H-Profilquerschnitt könnte auch um 90° gedreht das Unterrohr des Fahrradrahmens für das Elektrofahrrad bilden, wodurch dann die beiden Aufnahmeräume übereinanderliegend am Fahrradrahmen ausgebildet wären.

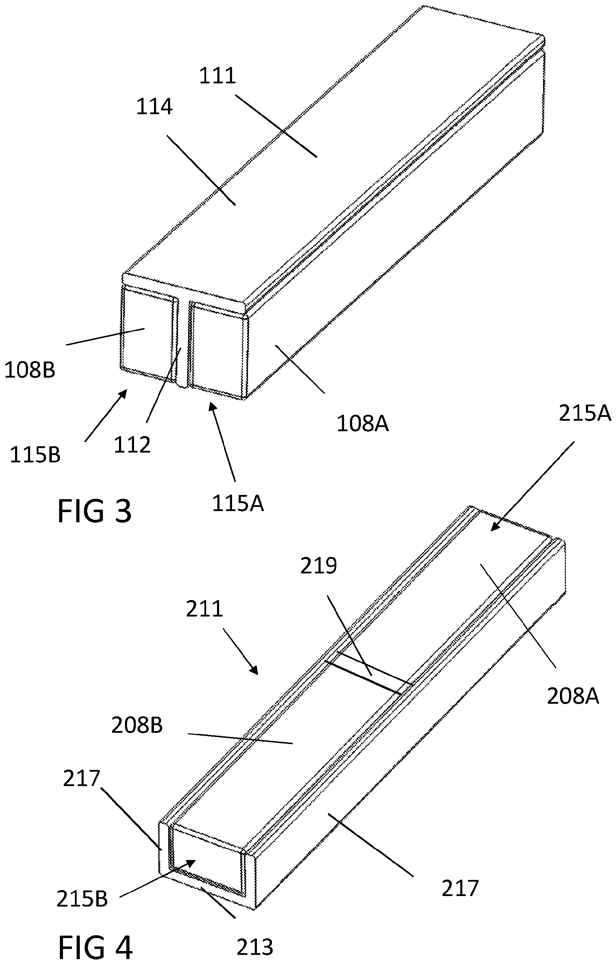

Figur 3 zeigt schematisch ein nicht beanspruchtes Ausführungsbeispiel, wobei hier nur ein anderer Profilabschnitt 111 mit T-förmigen Profilquerschnitt für das Unterrohr des Fahrradrahmens dargestellt ist. Aufgrund des T-förmigen Profilquerschnitts entstehen wiederum in Längserstreckung des Profilabschnitts 111 zwei separate, nebeneinander liegende Aufnahmeräume 115A, 115B zur Aufnahme von zwei separaten Energieversorgungseinheiten 108A, 108B. Im gezeigten Ausführungsbeispiel hat der Profilabschnitt 111 einen Obergurt 114 sowie einen Mittelsteg 112, der sich vom Obergurt 114 aus nach unten erstreckt. Die Energieversorgungseinheiten 108A, 108B müssen dann hängend am Profilabschnitt 111 verankert und arretiert werden. Der Profilabschnitt 111 könnte aber auch um 180° gedreht am Fahrradrahmen eingesetzt werden, wodurch das Gewicht der Energieversorgungseinheiten dann über den Gurt 114, der bei diesem Einbauzustand einen Untergurt bildet, abgefangen würden.

Die Figur 4 zeigt noch ein nicht erfindungsgemäßes Ausführungsbeispiel für einen Profilabschnitt 211 zur wahlweisen Aufnahme von einer oder zwei Energieversorgungseinheiten 208A, 208B. Der Profilabschnitt 211 hat hier einen U-förmigen Profilquerschnitt, weswegen zwei in Erstreckungsrichtung des Profilabschnitts 211 hintereinanderliegend angeordnete Aufnahmeräume 215A, 215B entstehen, die hier durch einen Zwischensteg 219 voneinander getrennt sind. Der u-förmige Profilquerschnitt des Profilabschnitts 211 weist einen Untergurt (Bodensteg) 213 auf, zu dessen beiden Seiten sich jeweils ein Seitensteg 217 nach oben erstreckt, um die Aufnahmeräume 215A, 215B für die Energieversorgungseinheiten 208A, 208B zwischen den Seitenstegen 217 und oberhalb des Bodenstegs 213 auszubilden, an dem sich zugleich die Energieversorgungseinheiten nach unten hin mit ihren Gewichtskräften abstützen können.

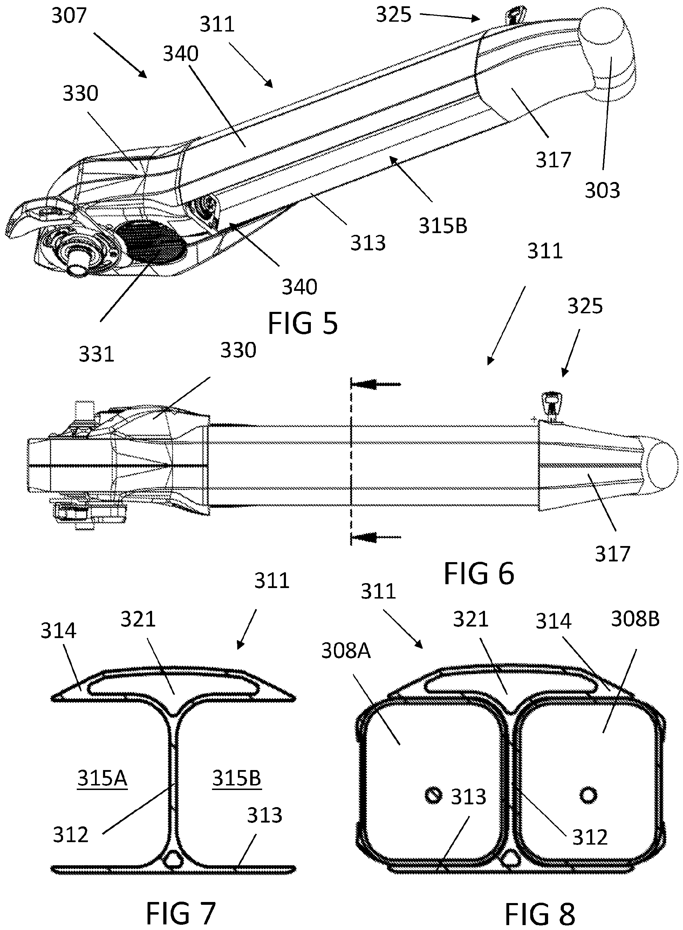

Die Figuren 5 bis 8 zeigen eine deutlich detailliertere Ausgestaltung eines Unterrohrs 307 zur Aufnahme von zwei Energieversorgungseinheiten 308A, 308B. Wie beim Ausführungsbeispiel nach Figur 2 weist das Unterrohr 307 einen Profilabschnitt 311 auf, der einen H-förmigen (I-profilförmigem) Profilquerschnitt hat und entsprechend, wie vor allem aus Figur 7 deutlich wird, mit einem Untergurt 313, einem Mittelsteg 312 und einem Obergurt 314 versehen ist. Es handelt sich um einen einstückigen Profilabschnitt, welcher beispielsweise von einem Stranggussprofil in passender Länge abgeschnitten wurde, und der Mittelsteg 312 erstreckt sich symmetrisch und mittig zwischen Obergurt 314 und Untergurt 313. Der Obergurt 314 ist mit einer integral angeformten Hohlkammer 321 versehen, über welche die Biegesteifigkeit und Torsionssteifigkeit des Profilabschnitts 311, ohne das Gewicht des Profilabschnitts nennenswert zu erhöhen, derart gesteigert werden kann, dass die erwarteten Belastungskräfte vom Unterrohr 307 sicher aufgenommen werden können. Die beiden Aufnahmeräume 315A, 315B sind entsprechend symmetrisch nebeneinander liegend am Profilabschnitt 311 ausgebildet. Zwischen dem Profilabschnitt 311 und einem Lenkkopfrohr 303 ist ein passend geformtes Übergangsstück 317 eingefügt, welches die Aufnahmeräume 315A, 315B nach vorne hin bzw. in Fahrtrichtung abschließt. In dem Übergangsstück 317 ist ein Schloss zur Sicherung beider Energieversorgungseinheiten (oder eines Verschlussdeckels oder eines Transportbehälters) gegen ungewollte Entnahme angeordnet, wobei von dem Schloss nur der Schlüssel 325 dargestellt ist, mit welchem das Schloss geöffnet werden kann, um wahlweise die Energieversorgungseinheit(en) zu entnehmen oder den Verschlussdeckel zu öffnen. Am entgegengesetzten Ende des Profilabschnitts 311 ist das Unterrohr 307 mit einem beispielsweise von einem Schmiedeteil oder Gußteil gebildeten Motorstützelement 330 versehen, in welchem ein schematisch nur angedeuteter Elektromotor 331 aufgenommen und abgestützt ist. Die Energieübertragung von einer montierten Energieversorgungseinheit zum Elektromotor erfolgt über eine Kontaktbuchse 340, die am Motorstützelement 330 befestigt ist und derart in den Aufnahmeraum 315B hineinragt, dass eine in den Aufnahmeraum 315B eingesetzte Energieversorgungseinheit mit einem passenden Kontaktstecker an der Energieversorgungseinheit (nicht dargestellt) elektrisch mit dem Elektromotor zur Energieübertragung gekoppelt ist. Es versteht sich, dass in dem in Figur 5 nicht sichtbaren hinteren Aufnahmeraum ebenfalls eine Kontaktbuchse angeordnet ist, um auch die zweite Energieversorgungseinheit im Montagezustand elektrisch mit dem Elektromotor koppeln zu können. Wie bei einem Elektrofahrrad (Pedelec) üblich erhält der Benutzer über den Elektromotor vorzugsweise nur dann eine Trittkraftunterstützung, wenn er gleichzeitig über die nicht dargestellten Pedalen das Fahrrad antreibt.

Bei sämtlichen dargestellten Ausführungsbeispielen sind die Energieversorgungseinheiten mit quaderförmigen Gehäusen dargestellt, und alle Ausführungsbeispiele zeigen jeweils die zugehörige Rahmenstrebe mit zwei Energieversorgungseinheiten. Es wäre aber jeweils möglich, dass Elektrofahrrad nur mit einer der beiden Energieversorgungseinheiten zu versehen und zu betreiben, und dann den frei bleibenden Aufnahmeraum für andere Zwecke, insbesondere als Stauraum, zu nutzen. Anstelle eines Transportbehälters könnte, insbesondere bei einem mehrseitig geschlossenen Aufnahmeraum, auch ein Verschlussdeckel vorgesehen werden, um den Aufnahmeraum als zum Transport geeigneten Stauraum zu nutzen. Es wäre auch möglich, Verschlussdeckel für die Aufnahmeräume vorzusehen, und im zugehörigen Aufnahmeraum dann entsprechend klein bauende Energieversorgungseinheiten anzuordnen.

Für den Fachmann ergeben sich aus der vorhergehenden Beschreibung zahlreiche Modifikationen, die in den Schutzbereich der Ansprüche fallen soll. Insbesondere für die Formgebung des Gehäuses der Energieversorgungseinheit und auch die Profilquerschnittsform des zugehörigen, zwei Aufnahmeräume aufweisenden Profilabschnitts besteht Gestaltungsspielraum. Die in den Figuren gezeigten Profilquerschnitte könnten beispielsweise nur um 45° gedreht eingesetzt werden, wodurch die beiden Aufnahmeräume sowohl nebeneinander als auch übereinander liegend angeordnet wären. Die Energieversorgungseinheiten könnten auch über die Außenabmessungen der zugehörigen Rahmenstrebe vorspringen. Die beiden Aufnahmeräume könnten auch im Oberrohr ausgebildet sein. Eine insgesamt rechteckförmige Ausgestaltung der die Aufnahmeräume aufweisenden Rahmenstrebe bildet das bevorzugte Ausführungsbeispiel, aber auch hier wären Abweichungen möglich. Die Erfindung ist daher insbesondere nicht auf die dargestellten Ausführungsbeispiele beschränkt. Es könnte noch weitere Stege mit Hohlräumen oder Hohlkammern versehen werden. Die Hohlkammern in den Stegen können zugleich auch als Kabelkanal genutzt werden.

## Patentansprüche

1. Fahrradrahmen für Elektrofahrräder, mit mehreren Rahmenstreben, die zumindest ein Unterrohr (307), ein Sattelrohr (1) und ein Lenkkopfrohr (303) des Fahrradrahmens bilden, mit wenigstens einem Aufnahmeraum zur lösbaren Anordnung einer Energieversorgungseinheit (308A, 308B) für einen Elektromotor (331) an einer der Rahmenstreben, wobei wenigstens eine Rahmenstrebe (307) einen Profilabschnitt (311) mit einem Mittelsteg (312), einem Untergurt (313) und einem obergurt (314) aufweist und zwei in Erstreckungsrichtung der Rahmenstrebe (307) nebeneinander an derselben Rahmenstrebe angeordnete und durch den Mittelsteg (312) der Rahmenstrebe voneinander getrennt Aufnahmeräume (315A, 315B) bildet, wobei wahlweise beide Aufnahmeräume (315A, 315B) oder nur einer der Aufnahmeräume mit einer Energieversorgungseinheit (308A, 308B) bestückbar oder bestückt ist und jeder Aufnahmeraum (315A, 315B) eine Seitenöffnung hat, durch welche hindurch die Energieversorgungseinheit entnehmbar in einen der Aufnahmeräume einsetzbar ist, **dadurch gekennzeichnet, dass** der Obergurt (314) und/oder der Untergurt (313) eine Hohlkammer (321) aufweisen.

2. Fahrradrahmen nach Anspruch 1, **dadurch gekennzeichnet, dass** die Rahmenstrebe, welche die zwei Aufnahmeräume aufweist, zumindest in dem mit den Aufnahmeräumen versehenen Abschnitt (311) einen bezogen auf ihre Erstreckungsrichtung symmetrischen Profilquerschnitt aufweist.

3. Fahrradrahmen nach einem der vorhergehenden Ansprüche, **dadurch gekennzeichnet, dass** die mit zwei Aufnahmeräumen versehene Rahmenstrebe das Unterrohr (307) des Fahrradrahmens bildet.

4. Fahrradrahmen nach einem der vorhergehenden Ansprüche, **dadurch gekennzeichnet, dass** die Rahmenstrebe (307), welche die zwei Aufnahmeräume aufweist, zumindest partiell einen H-förmigen Profilquerschnitt - aufweist.

5. Fahrradrahmen nach einem der vorhergehenden Ansprüche, **dadurch gekennzeichnet, dass** jeder Aufnahmeraum zur zumindest partiell integrierten Aufnahme einer Energieversorgungseinheit ausgebildet ist, wobei wenigstens einer der Aufnahmeräume mit einem an der Rahmenstrebe verankerbaren Verschlussdeckel verschließbar und als Stauraum verwendbar ist.

6. Fahrradrahmen nach einem der Ansprüche 1 bis 5, **dadurch gekennzeichnet, dass** jeder Aufnahmeraum zur integrierten Aufnahme einer Energieversorgungseinheit ausgebildet ist, wobei im Montagezustand einer Energieversorgungseinheit wenigstens eine Außenwand eines Gehäuses der Energieversorgungseinheit an der Rahmenstrebe frei liegt, und vorzugsweise den zugehörigen Aufnahmeraum verschließt.

7. Fahrradrahmen nach einem der Ansprüche 1 bis 5, **dadurch gekennzeichnet, dass** jeder Aufnahmeraum zur integrierten Aufnahme einer Energieversorgungseinheit ausgebildet ist, wobei jedem Aufnahmeraum ein an der Rahmenstrebe verankerbarer Verschlussdeckel zugeordnet ist.

8. Fahrradrahmen nach einem der Ansprüche 1, 2 oder 4 bis 7, sofern sie nicht von Anspruch 3 abhängig sind, **dadurch gekennzeichnet, dass** der Fahrradrahmen mit einem Lenkkopfrohr und/oder Unterrohr mit dem Sattelrohr verbindenden Oberrohr versehen ist und die mit zwei Aufnahmeräumen versehene Rahmenstrebe das Oberrohr des Fahrradrahmens bildet.

9. Elektrofahrrad mit einem Fahrradrahmen mit mehreren Rahmenstreben, mit einem Elektromotor und mit wenigstens einem Aufnahmeraum zur lösbaren Anordnung einer Energieversorgungseinheit für den Elektromotor an einer der Rahmenstreben, **dadurch gekennzeichnet, dass** der Fahrradrahmen gemäß einem der Ansprüche 1 bis 8 ausgebildet ist.

10. Elektrofahrrad nach Anspruch 9, **gekennzeichnet durch** eine Schaltungsanordnung zur Detektierung, ob beide Aufnahmeräume jeweils mit einer Energieversorgungseinheit versehen sind, und zur Steuerung der Energieentnahme bei simultaner Bestückung des Elektrofahrrades mit mehreren Energieversorgungseinheiten.

11. Elektrofahrrad nach Anspruch 9 oder 10, **gekennzeichnet durch** einen in den Aufnahmeraum eingesetzten oder einsetzbaren Transportbehälter.

12. Elektrofahrrad nach Anspruch 11, **dadurch gekennzeichnet, dass** jedem Aufnahmeraum Arretiereinrichtungen zum Zusammenwirken mit Arretiermitteln an einer Energieversorgungseinheit zugeordnet sind und der Transportbehälter mit den Arretierungseinrichtungen am Fahrradrahmen zusammenwirkende Arretiermittel aufweist.

13. Elektrofahrrad nach Anspruch 11 oder 12, **dadurch gekennzeichnet, dass** der Transportbehälter ein Behältergehäuse aufweist, wobei das Behältergehäuse der Formgebung des Gehäuses der Energieversorgungseinheit im Wesentlichen entspricht.

14. Elektrofahrrad nach Anspruch einem der Ansprüche 9 bis 13, **dadurch gekennzeichnet, dass** wenigstens eine Hohlkammer (321) als Kabelkanal genutzt wird.

## Claims

1. Bicycle frame for electric bicycles, comprising multiple frame tubes which form at least a down tube (307), a seat tube (1) and a steerer tube (303) of the bicycle frame, comprising at least one receiving space for releasably arranging a power supply unit (308A, 308B) for an electric motor (331) on one of the frame tubes, wherein at least one frame tube (307) has a profile section (311) with a central web (312), a lower flange (313) and an upper flange (314) and forms two receiving spaces (315A, 315B) which are arranged next to each other in the direction of extent of the frame tube (307) on the same frame tube and are separated from each other by the central web (312) of the frame tube, wherein selectively both receiving spaces (315A, 315B) or only one of the receiving spaces can be fitted or is fitted with a power supply unit (308A, 308B) and each receiving space (315A, 315B) has a side opening through which the power supply unit can be removably inserted into one of the receiving spaces, **characterized in that** the upper flange (314) and/or the lower flange (313) have/has a hollow chamber (321) .

2. Bicycle frame according to Claim 1, **characterized in that** the frame tube which has the two receiving spaces has, at least **in that** portion (311) which is provided with the receiving spaces, a profile cross section which is symmetrical with respect to its direction of extent.

3. Bicycle frame according to either of the preceding claims, **characterized in that** the frame tube which is provided with two receiving spaces forms the down tube (307) of the bicycle frame.

4. Bicycle frame according to any of the preceding claims, **characterized in that** the frame tube (307) which has the two receiving spaces at least partially has an H-shaped profile cross section.

5. Bicycle frame according to any of the preceding claims, **characterized in that** each receiving space is designed for receiving a power supply unit in an at least partially integrated manner, wherein at least one of the receiving spaces can be connected to a closure cover which can be anchored to the frame tube and can be used as a storage space.

6. Bicycle frame according to any of Claims 1 to 5, **characterized in that** each receiving space is designed for receiving a power supply unit in an integrated manner, wherein, when a power supply unit is in the mounted state, at least one outer wall of a housing of the power supply unit on the frame is free, and preferably closes the associated receiving space.

7. Bicycle frame according to any of Claims 1 to 5, **characterized in that** each receiving space is designed for receiving a power supply unit in an integrated manner, wherein a closure cover which can be anchored to the frame tube is associated with each receiving space.

8. Bicycle frame according to any of Claims 1, 2 or 4 to 7 if they are not dependent on Claim 3, **characterized in that** the bicycle frame is provided with a steerer tube and/or top tube which connects the down tube to the seat tube and the frame tube which is provided with two receiving spaces forms the top tube of the bicycle frame.

9. Electric bicycle having a bicycle frame comprising a plurality of frame tubes, comprising an electric motor and comprising at least one receiving space for releaseably arranging a power supply unit for the electric motor on one of the frame tubes, **characterized in that** the bicycle frame is designed according to one of Claims 1 to 8.

10. Electric bicycle according to Claim 9, **characterized by** a circuit arrangement for detecting whether each of the two receiving spaces are provided with a power supply unit, and for controlling energy consumption while simultaneously fitting several power supply units to the electric bicycle.

11. Electric bicycle according to Claim 9 or 10, **characterized by** a transportation container which is inserted or can be inserted into the receiving space.

12. Electric bicycle according to Claim 11, **characterized in that** locking devices for interacting with locking means on a power supply unit are associated with each receiving space and the transportation container has locking means which interact with the locking devices on the bicycle frame.

13. Electric bicycle according to Claim 11 or 12, **characterized in that** the transportation container has a container housing, wherein the container housing substantially corresponds to the shape of the housing of the power supply unit.

14. Electric bicycle according to one of Claims 9 to 13, **characterized in that** at least one hollow chamber (321) is used as a cable duct.

## Revendications

1. Cadre de vélo pour vélo électrique, avec plusieurs montants de cadre qui forment au moins un tube inférieur (307), un tube de selle (1) et un tube de direction (303) du cadre de vélo, avec au moins un espace de réception pour l'agencement amovible d'une unité d'alimentation en énergie (308A, 308B) pour un moteur électrique (331) sur un des montants de cadre, au moins un montant de cadre (307) présentant une section de profilé (311) avec une âme centrale (312), une membrure inférieure (313) et une membrure supérieure (314), et formant deux espaces de réception (315A, 315B) disposés l'un à côté de l'autre dans la direction d'extension du montant de cadre (307), sur le même montant de cadre, et séparés l'un de l'autre par l'âme centrale (312) du montant de cadre, les deux espaces de réception (315A, 315B) ou seulement l'un des espaces de réception étant aptes à être équipés ou étant équipés d'une unité d'alimentation en énergie (308A, 308B) et chaque espace de réception (315A, 315B) ayant une ouverture latérale à travers laquelle l'unité d'alimentation en énergie est apte à être insérée de manière amovible dans l'un des espaces de réception, **caractérisé en ce que** la membrure supérieure (314) et/ou la membrure inférieure (313) présentent une chambre creuse (321).

2. Cadre de vélo selon la revendication 1, **caractérisé en ce que** le montant de cadre, qui présente les deux espaces de réception, présente, au moins dans la section (311) pourvue des espaces de réception, une section de profil symétrique par rapport à sa direction d'extension.

3. Cadre de vélo selon l'une des revendications précédentes, **caractérisé en ce que** le montant de cadre pourvu de deux espaces de réception forme le tube inférieur (307) du cadre de vélo.

4. Cadre de vélo selon l'une des revendications précédentes, **caractérisé en ce que** le montant de cadre (307) qui présente les deux espaces de réception présente au moins partiellement une section transversale de profilé en forme de H.

5. Cadre de vélo selon l'une des revendications précédentes, **caractérisé en ce que** chaque espace de réception est conçu pour recevoir, de manière au moins partiellement intégrée, une unité d'alimentation en énergie, au moins un des espaces de réception étant apte à être fermé par un couvercle de fermeture apte à être ancré sur le montant de cadre, et étant apte à être utilisé comme espace de rangement.

6. Cadre de vélo selon l'une des revendications 1 à 5, **caractérisé en ce que** chaque espace de réception est conçu pour recevoir de manière intégrée une unité d'alimentation en énergie, au moins une paroi extérieure d'un boîtier de l'unité d'alimentation en énergie étant exposée sur le montant de cadre dans l'état de montage d'une unité d'alimentation en énergie, et fermant de préférence l'espace de réception correspondant.

7. Cadre de vélo selon l'une des revendications 1 à 5, **caractérisé en ce que** chaque espace de réception est conçu pour recevoir de manière intégrée une unité d'alimentation en énergie, un couvercle de fermeture apte à être ancré sur le montant de cadre étant associé à chaque espace de réception.

8. Cadre de vélo selon l'une des revendications 1, 2 ou 4 à 7, dans la mesure où elles ne dépendent pas de la revendication 3, **caractérisé en ce que** le cadre de vélo est pourvu d'un tube supérieur relié à un tube de selle avec un tube de direction et/ou un tube inférieur, et **en ce que** le montant de cadre pourvu de deux espaces de réception forme le tube supérieur du cadre de vélo.

9. Vélo électrique avec un cadre de vélo ayant plusieurs montants de cadre, un moteur électrique et au moins un espace de réception pour l'agencement amovible d'une unité d'alimentation en énergie pour le moteur électrique sur l'un des montants de cadre, **caractérisé en ce que** le cadre de vélo est conçu selon l'une des revendications 1 à 8.

10. Vélo électrique selon la revendication 9, **caractérisé par** un dispositif de commutation pour détecter si les deux espaces de réception sont chacun pourvus d'une unité d'alimentation en énergie et pour commander le prélèvement d'énergie lorsque le vélo électrique est équipé simultanément de plusieurs unités d'alimentation en énergie.

11. Vélo électrique selon la revendication 9 ou la revendication 10, **caractérisé par** un récipient de transport inséré ou apte à être inséré dans l'espace de réception.

12. Vélo électrique selon la revendication 11, **caractérisé en ce que** des dispositifs d'arrêt sont associés à chaque espace de réception pour coopérer avec des moyens d'arrêt sur une unité d'alimentation en énergie et **en ce que** le conteneur de transport présente des moyens d'arrêt coopérant avec les dispositifs d'arrêt présents sur le cadre du vélo.

13. Vélo électrique selon la revendication 11 ou la revendication 12, **caractérisé en ce que** le conteneur de transport présente un boîtier de conteneur, le boîtier de conteneur correspondant sensiblement à la forme du boîtier de l'unité d'alimentation en énergie.

14. Vélo électrique selon l'une des revendications 9 à 13, **caractérisé en ce qu'**au moins une chambre creuse (321) est utilisée comme conduit de câbles.
